(19) Europäisches Patentamt
European Patent Office
Office européen des brevets

(11) **EP 4 429 091 A1**

(12) **EUROPEAN PATENT APPLICATION**
published in accordance with Art. 153(4) EPC

(43) Date of publication:
**11.09.2024 Bulletin 2024/37**

(21) Application number: **22888700.6**

(22) Date of filing: **02.11.2022**

(51) International Patent Classification (IPC):
*H02M 1/12* (2006.01)    *H02M 1/26* (2006.01)
*H01F 30/12* (2006.01)    *H01F 30/02* (2006.01)
*H02J 3/01* (2006.01)    *H01F 27/28* (2006.01)

(52) Cooperative Patent Classification (CPC):
**H01F 27/28; H01F 30/02; H01F 30/12; H02J 3/01;
H02M 1/12; H02M 1/26;** Y02E 40/40

(86) International application number:
**PCT/CL2022/050110**

(87) International publication number:
**WO 2023/077247 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2021 US 202163275547 P**

(71) Applicant: **Veloso, Fabian
Las Condes Santiago, 7550288 (CL)**

(72) Inventor: **Veloso, Fabian
Las Condes Santiago, 7550288 (CL)**

(74) Representative: **Cueto, Sénida
SP3 Patents S.L.
Los Madroños, 23
28891 Velilla de San Antonio (ES)**

(54) **DEVICE FOR THE RETURN OF HOMOPOLAR RESIDUAL CURRENTS FLOWING THROUGH THE NEUTRAL OF AN ELECTRICAL DISTRIBUTION SYSTEM**

(57) The present invention relates to a passive stabilizer designed to attract residual neutral currents before they reach the transformer. This function prevents faults caused by current 'returns' between single-phase loads and their windings. The stabilizer comprises six groups of coils for each phase, with each group consisting of six coils arranged in pairs per phase on each leg of a core. Each coil within these groups has an identical number of turns, where each group of coils completes six flux breaks per phase. This configuration effectively addresses the issue of residual currents flowing through the neutral before reaching the transformer. This prevents the distortion of voltage signals and maintains the efficiency of the transformer.

FIG.5    500

## Description

This application claims the benefit of U.S. Provisional Application No. 63/275,547, filed November 4, 2021, which is incorporated herein by reference in its entirety.

## TECHNICAL FIELD OF THE INVENTION

This disclosure relates to harmonic distortion in low voltage electrical networks particularly relating to passive stabilizers of residual currents flowing through the neutral in a polyphase electrical distribution system.

## BACKGROUND OF THE INVENTION

Electrical distribution systems are used to supply residential consumers and most industrial applications, using voltages of less than 1 [kV] between phases (commonly 110 and 220 [V] single-phases are used for residential consumption and 500 to 600 [V] between phases for industrial uses).

These systems are fed from medium or high voltage networks through voltage transformers, which are the equipment used to lower the primary voltage so that it can be used without the need for costly and dangerous equipment and facilities. The distribution transformer itself is the interface between the primary feeders and the secondary feeders. These transformers can have "n" number of phases, but currently the three-phase (3 phases) or two-phase (two phases) transformers are the most common.

In the case of polyphase transformers with a common neutral, they also function to balance the loads in the low voltage network, which is to say keeping the network supply lines equally phase-shifted relative to each other, with the same magnitude and operating at the same angular frequency. This keeps the efficiency values very high, since a polyphase system achieves its highest level of efficiency and operation when it is as balanced as possible.

To achieve this balance, the transformer physically connects the lines (phases) through a return point called the 'Neutral.' This is done so that the current difference resulting from the vector sum of these phases can circulate through the transformer. This residual current will enter the transformer core through the neutral connection point and will compensate the magnetic flux of the transformer's "N" phases, thereby achieving balanced phases on the high voltage side of the system.

Three-phase systems are a specific case of "polyphase systems". In a polyphase system the power is supplied by a set of "n" sinusoidal voltage sources, all having the same amplitude and frequency, but with each having a different angular phase shift. In the case of a three-phase system where n=3, the phases of the three sources are separated by 120 degrees. In this case, we distinguish between two source configurations: sources connected in 'Y' (star) and sources connected in 'D' (delta).

These AC systems supply power to electronic devices used in our homes and offices, (such as televisions, computers, printers, microwave ovens, LED lights, video game consoles, cell phone chargers etc.). These devices are known as non-linear loads.

These types of loads operate on direct current (DC), and require alternating current (AC) to direct current (DC) converters to function. Typically, but not exclusively, these converters consist of full-wave rectifier diode bridges that feed a capacitor connected in parallel with the load. The continuous charging and discharging of the capacitor causes distortions in the current waveform, resulting in sharp peaks.

This type of distortion is repeated periodically during the entire time of use of the electronic device, and its distortion is repetitive and continuous overtime. This anomaly is known as harmonic distortion, a term derived from the mathematical operation used to analyse this phenomenon. The mathematical analysis, known as Fourier Analysis, involves decomposing the distorted signal into multiple sine waves of different frequencies, each of which is a multiple of the fundamental frequency. These sine waves, known as "harmonics", in practice are transformed into residual currents that circulate through the neutral, thereby overloading the distribution systems and reducing the efficiency of distributed energy use.

To solve the problem of residual currents circulating through the neutral, a passive stabilizer is introduced. This device effectively attracts these residual currents before they reach the transformer, thus preventing voltage signal distortions thereby maintaining the transformer's efficiency. Additionally, it is capable of preventing failures associated with the 'return' currents between single-phase loads and their windings.

The identified prior art fails to overcome the technical problem described. More details are provided on page 11 of this document.

## BRIEF DESCRIPTION OF THE INVENTION

Details of one or more examples are set forth in the accompanying drawings and description below. Other features, purposes and advantages will become apparent based on the description, drawings and claims.

## BRIEF DESCRIPTION OF THE DRAWINGS

FIG.1. Power flow, 4-wire distribution network.
FIG.2. Example of distorted current with a third-order harmonic.
FIG.3. Example of third-order harmonic current for balanced R, S, T phases.
FIG.4. Distribution network plan with the invention at [in] P1.
FIG.5. Flow of zero-sequence harmonic currents in the inventive device.
FIG.6. Electromagnetic circuit of the invention for three-phase distribution systems.
FIG.7. Wound core of the invention.
FIG.8. Connection diagram and flow direction of the invention.
FIG.9. Vector connection diagram of the invention's Stabilizer.
FIG. 10. Magnetic flux of the invention's Stabilizer.
FIG.11. Voltage phasor diagram of the invention's Stabilizer.
FIG.12. Phase shift angles in the voltage phasor diagram of the invention's stabilizer
FIG.13. Geometry of an obtuse triangle.
FIG.14. Voltage drop in windings of the invention's stabilizer.
FIG.15. Simulation of distribution network with the invention's stabilizer.
FIG.16. Phasor diagram of the invention's stabilizer in a two-phase system.
FIG.17. Diagram of the wound core of the invention's stabilizer.
FIG.18. Magnetic flux of the invention's stabilizer.
FIG.19. Phasor and core diagram of US 6043569 A prior art.
FIG.20. Phasor and core diagram of CL 2007001057 A1 prior art.
FIG.21. Phasor and core diagram of ES 2575589 A1 prior art.

## DETAILED DESCRIPTION

From the following detailed description of illustrative embodiments of the present disclosure in conjunction with the accompanying figures, other aspects, advantages, and prominent features of the following description will be apparent to those persons skilled in the art.

In the following disclosure, the terms "include" and "comprise" and their derivatives mean inclusion without limitation; the term "or" may have an inclusive meaning and mean "and/or".

In this specification, the various embodiments described to illustrate the principles of the present disclosure are merely illustrative and should not be construed as limiting the scope of the disclosure. The following description with reference to the appended Figures is used to aid in the complete understanding of the illustrative embodiments of the present disclosure defined by the claims and equivalents thereof. The following disclosure includes a variety of specific details to facilitate understanding, but these details should be considered as merely illustrative.

Therefore, persons skilled in the art will recognize that various changes and modifications can be made to the embodiments described herein without departing from the scope and spirit of the present disclosure.

This document is provided solely for activities related to the expert evaluation process, and for simplicity, descriptions of known functions and structures have been omitted.

In the known four-wire electrical distribution systems, consisting of three phases and one neutral, where this system's three-phase loads generally comprise three impedances (Zr, Zs, and Zt) that can be connected in 'Y' (star) or '∆' (delta), the three-phase load is considered balanced if the three impedances are equal. The system functions as follows:

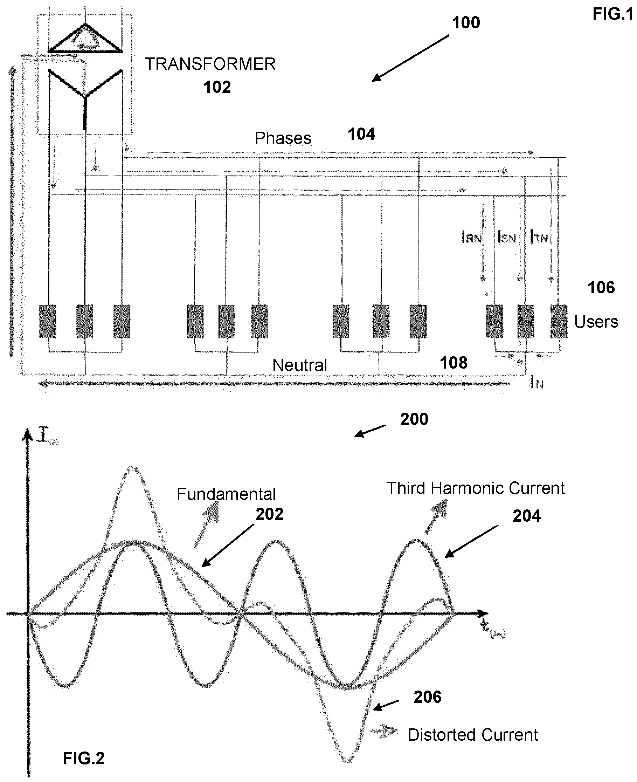

First, as shown in Figure 1, we have a distribution substation, hereinafter referred to as 'SED,' designated by the numeral 102. This substation is responsible for delivering the electric power demanded by customers who are connected via the three phases R, S, and T (104) and the neutral (108) of the feeder to that substation.

The loads (also referred to as receivers) (106) that consume energy, both three-phase and single-phase, are generally unbalanced due to the dynamic consumption patterns within the city (due to the switching on and off of electronic equipment, lights, elevators, and other devices). As a result, a residual current flows from the loads (106) through the neutral wire (108) to the SED (102).

The magnitude of this current is determined by the following equations:

$$I_R = I_{RN} = \frac{V_{RN}}{Z_{RN}}$$ (Eq.1: Equation for the current from phase R to neutral, which is related to

the voltage from phase R to neutral and the impedance from phase R to neutral).

$$I_S = I_{SN} = \frac{V_{SN}}{Z_{SN}}$$ Eq. 2: Equation for the current from phase S to neutral).

$$I_T = I_{TN} = \frac{V_{TN}}{Z_{TN}}$$ Eq. 3: Equation for the current from phase T to neutral).

Where IRN represents the current from phase R to neutral, flowing through the load ZRN. ISN is the current from phase S to neutral flowing through the load ZSN, and ISN is the current from phase T to neutral flowing through the load ZTN.]

This fulfils what we have seen previously for balanced systems.

$$I_R + I_S + I_T = I_N$$ (Eq. 4: The total neutral current is equal to the sum of the currents from

each phase).

And for unbalanced systems (such as distribution networks),

$$I_R + I_S + I_T = I_N \neq 0$$ (Eq. 5: In unbalanced systems, the neutral current is not equal to the

sum of the phase currents).

The electronic devices we use in our homes and offices, such as televisions, computers, printers, microwave ovens, LED lights, video game consoles, and cell phone chargers, are known as non-linear loads.

These types of loads operate on direct current (DC), and require alternating current (AC) to direct current (DC) converters to function. Typically, but not exclusively, these converters consist of full-wave rectifier diode bridges that feed a capacitor connected in parallel with the load. The continuous charging and discharging of the capacitor causes distortions in the current waveform, resulting in sharp peaks.

This type of distortion is repeated periodically during the entire time of use of the electronic device, and its distortion is repetitive and continuous over time.

This anomaly, as mentioned above, is known as **harmonic distortion.**

In Fig. 2, item (200) shows a simple decomposition of a current signal, where the fundamental current (202) and a third harmonic current (204) are added, resulting in a distorted current (206).

The harmonic content of the solid state electronic charges is expressed as follows:

$$N^{\underline{o}}Arm = 6N - 3 \text{ (Eq. 6: Harmonic Content)}$$

Where: N°Arm: Harmonic order number, and N: Number of cycles (discrete period).

These are defined as the harmonics that are odd multiples of three (3rd, 9th, 15th, 21st, etc.), which propagate through the neutral wire regardless of the distribution system's unbalanced condition.

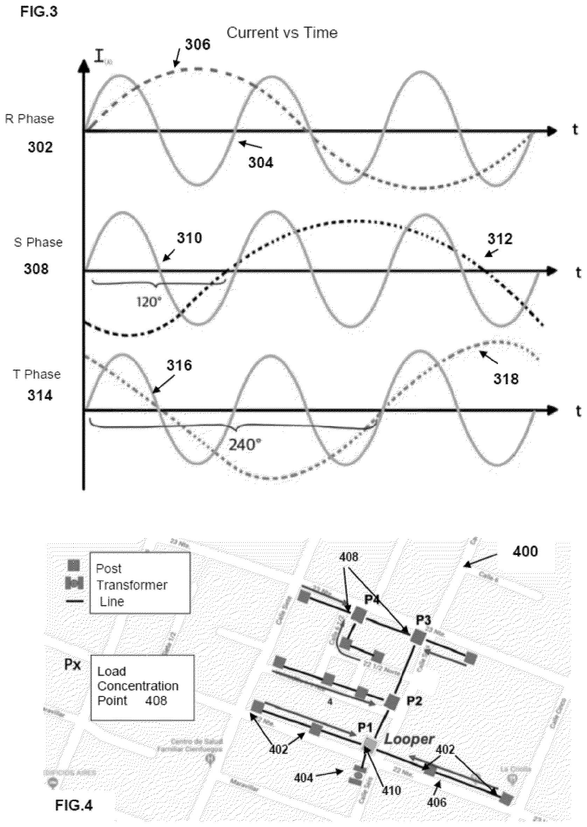

Fig. 3 will clarify this particular phenomenon of zero-sequence harmonic currents, as it illustrates the currents flowing through each of the R, S, and T phases and their third harmonics. In effect, for phase R (302), the current (306) is influenced by the third harmonic (304). Similarly, for phase S (308), its current (312) is 120° out of phase from current R (302), and its third harmonic current (310). Likewise, for phase T (314), its current (318) is 240° out of phase from current R (302), and its third harmonic current (316).

As a result of these phenomena in the distribution network, the residual currents are governed by the following equations:

$$I_{rms} = \sqrt{\sum_{n=1}^{50} I_n^2} \text{ (Eq. 7: RMS Current Equation)}$$

$$I_{\emptyset rms} = \sqrt{I_1^2 + I_2^2 + I_3^2 + . + I_{50}^2} \quad \text{(Eq. 8: RMS Phase Current Equation)}$$

$$THD - i = \frac{\sqrt{\Sigma_{n=2}^{50} I_n^2}}{I_1} * 100\% \quad \text{(Eq. 9: Equation for Calculating Total Harmonic Distortion of}$$

Current)

$$I_{R_{rms}} = \sqrt{I_1^2 + I_2^2 + I_3^2 + . + I_{50}^2} \quad \text{(Eq. 10: Equation for RMS Current per Phase)}$$

$$I_{S_{rms}} = \sqrt{I_1^2 + I_2^2 + I_3^2 + . + I_{50}^2} \quad \text{(Eq. 11: Equation for RMS Current per Phase)}$$

$$I_{T_{rms}} = \sqrt{I_1^2 + I_2^2 + I_3^2 + . + I_{50}^2} \quad \text{(Eq. 12: Equation for RMS Current per Phase)}$$

For a balanced system, we observe the following:

$$I_{R_{rms}} + I_{S_{rms}} + I_{T_{rms}} = I_{N_{rms}} \quad \text{(Eq. 13: Equation for RMS Current in the Neutral)}$$

The following example illustrates the behaviour of the residual current in the presence of the distortion phenomena within a balanced network:

$$I_1 = 10[A]; \ I_3 = 2{,}5[A]; \ I_5 = 1{,}5[A]; \ I_7 = 0{,}7[A]; \ I_9 = 0{,}5[A]$$

$$THD - i = \frac{\sqrt{2{,}5^2 + 1{,}5^2 + 0{,}7^2 + 0{,}5^2}}{10} * 100\% = 30\%$$

$$I_{R_{rms}} = \sqrt{I_1^2 + I_3^2 + I_5^2 + I_7^2 + I_9^2} = \sqrt{10^2 + 2{,}5^2 + 1{,}5^2 + 0{,}7^2 + 0{,}5^2} = 10{,}45[A]$$

$$I_{S_{rms}} = \sqrt{I_1^2 + I_3^2 + I_5^2 + I_7^2 + I_9^2} = \sqrt{10^2 + 2{,}5^2 + 1{,}5^2 + 0{,}7^2 + 0{,}5^2} = 10{,}45[A]$$

$$I_{T_{rms}} = \sqrt{I_1^2 + I_3^2 + I_5^2 + I_7^2 + I_9^2} = \sqrt{10^2 + 2{,}5^2 + 1{,}5^2 + 0{,}7^2 + 0{,}5^2} = 10{,}45[A]$$

$$I_{T_{rms}} = \sqrt{I_1^2 + I_3^2 + I_5^2 + I_7^2 + I_9^2} = \sqrt{10^2 + 2{,}5^2 + 1{,}5^2 + 0{,}7^2 + 0{,}5^2} = 10{,}45[A]$$

However, the zero-sequence harmonics are in phase, and thus, they accumulate in the neutral wire. This contrasts with the fundamental component, which is subtracted when out of phase by $\pm 120°$.
Zero-sequence Harmonics : $I_3 = 2{,}5[A]$; $I_9 = 0{,}5[A]$

$$I_{\emptyset_{homopolar}} = I_3 + I_9 \text{ (Eq.14)}$$

Therefore,

$$I_{R_{homopolar}} + I_{S_{homopolar}} + I_{T_{homopolar}} = I_{N_{rms}} \text{ (Eq.15)}$$

$$I_{N_{rms}} = 2,5 + 0,5 + 2,5 + 0,5 + 2,5 + 0,5 = 9 \text{ [A]}$$

Once this phenomenon is understood, it becomes clear that the residual neutral currents depend not only on the phase balance but also on the harmonic distortion present in the network.

For unbalanced systems, the degree of unbalance is calculated, and the values of the sum of zero-sequence currents are added, resulting in the following equation:

$$\text{For } I_{R_{rms}} > I_{S_{rms}} > I_{T_{rms}} \text{(Eq.16: Phase Unbalance of RMS Currents)}$$

$$I_{R_{rms}} - \frac{(I_{S_{rms}} + I_{T_{rms}})}{2} = I_{desbalance_{rms}} \text{ (Eq. 17: Equation for Calculating Unbalanced RMS Current)}$$

$$I_{N_{rms}} = I_{desbalance_{rms}} + I_{R_{homopolar}} + I_{S_{homopolar}} + I_{T_{homopolar}} \text{ (Eq. 18: Equation for RMS Current Flowing Through the Neutral in Unbalanced Systems)}$$

To address the issue of residual neutral currents flowing through the neutral, this invention aims to develop a passive stabilizer that captures these currents before they reach transformer (102). This prevents distortion of the voltage signals and enhances the efficiency of the transformer.

This passive stabilizer is designed with a synchronization system that aligns with the electrical network, to prevent failures even if one or more phases of the distribution system are lost.

The inventive device is connected in parallel with the system loads, specifically at the first bifurcation of the low voltage distribution circuit. As illustrated in Fig. 4, the connection of the inventive device (410) is positioned at a specific connection point between a transformer (404), poles (402), and connected via line (406).

This creates a bypass that collects the residual currents and re-circulates them through the phases back to the loads, thereby improving the balance of the distribution transformer.

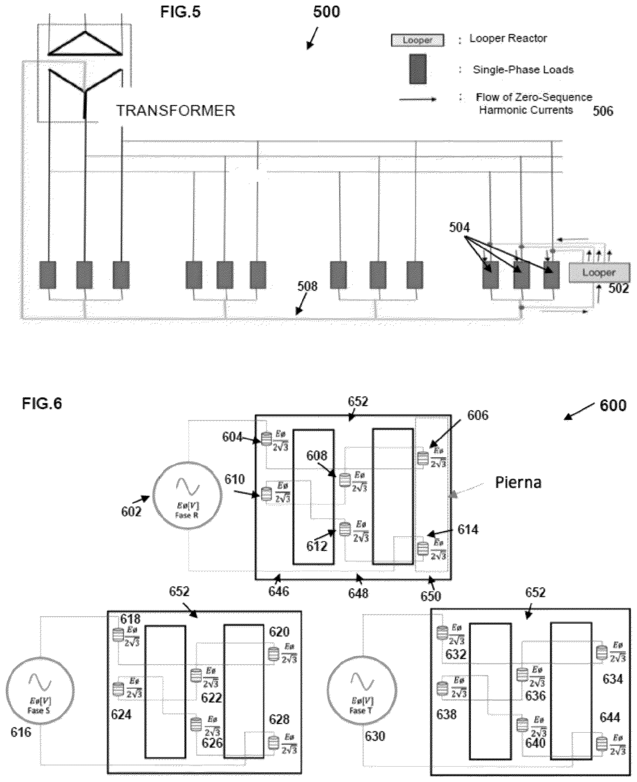

The arrangement described is illustrated in Fig. 5, which depicts the circuit from Fig. 1, now with the invention (502) connected in parallel between each of the phases R, S, and T, associated with the single-phase loads (504) and the neutral (508).

The flow of zero-sequence currents (506), as shown in Fig. 5 and described in Equation 15, shows that these currents, instead of flowing to the neutral, return to their respective phases.

To construct the high absorption stabilizer for residual currents circulating through the neutral of the distribution network, as described in the invention, it is first necessary to calculate the apparent power and the number of turns in the windings. Equations known to the art are used for this purpose.

In the case of the apparent power, the value of the residual neutral currents is obtained and then multiplied by the network voltage where the invention's stabilizer will be connected. Using these variables, the power of the stabilizer can be calculated as follows:

$$S = V * I \text{ (Eq. 19: Equation for Apparent Power)}$$

By determining the value of S, we obtain the area of each 'leg' of the reactor core, where 'leg' refers to the iron section of the core around which the coils are wound. Refer to Fig. 6 for details.

$$A = \sqrt[2]{S} \text{ (Eq. 20: Area of Each Leg of the Core)}$$

Where A is the area in cm$^2$ of each leg of the three-phase core of the invention's stabilizer, and S represents the apparent power in volt-amperes (VA) of each reactor leg.

With the determined area of each leg of the invention's stabilizer, we can specify the core material [chapa?] to be used and the space available for accommodating the number of turns in each coil per leg:

$$N_b = \frac{N_{E\emptyset} * V_{v\emptyset} * 10^8}{4,44 * A * \Phi * f} \text{ (Eq. 21: Equation Defining the Number of Turns for Each Leg of the Core in}$$

the Invention)

Where: $N_b$: *number of coil turns per leg*

$N_{E\emptyset}$: *number of turns per leg of the invention's Stabilizer*

$V_{v\emptyset}$: *Coil voltage per phase of the stabilizer of the invention = 2 * E_phase.*

*A: area of core leg*

$\Phi$: *Magnetic flux of the core lamination.*

*f: network frequency*

When we determine the number of turns (Nb) for each leg, we divide this by the number of phases in the system, and then by two, to facilitate the comparison of fluxes.

In general, the above is described by the following equation:

$$N_v = \frac{N_b}{2 * \text{N}^\circ \text{ fases}} \text{ (Eq. 22: Number of Turns per Coil per Layer)}$$

Where:

$N_v$ = *number of coil turns per layer*

*N°phases = number of phases in the electrical distribution system*

For the specific case of a three-phase distribution system, supplied at *E*ø volts, the equivalent circuit of the invention's stabilizer is illustrated in Fig. 6. It displays three equivalent circuits per phase (600), with respective connections by their network phases R (602), S (616), and T (630).

Each of the three phases R, S, and T of the three-phase core 652, which has three legs 646, 648, and 650, features an array of 18 coils: (604, 606, 608, 610, 612, 614, 618, 620, 622, 624, 626, 628, 632, 634, 636, 638, 640, and 644). These coils are grouped into six coils per phase, forming six layers for each leg (646, 648, and 650). For simplicity the leg numbers in the S and T phases are omitted, but it should be understood that for all 3 phases it is the same core (652). Furthermore, a person skilled in the art will recognize that generators (602, 616, and 630) represent the same three-phase generator for each phase, each with its respective phase lag expressed in degrees.

Where coils (604, 610, 618, 624, 624, 632 and 638) are installed on the first leg (646), coils 608, 612, 622, 626, 636 and 640) are installed on the second leg (648), and coils (606, 614, 620, 628, 634 and 644) are installed on the third leg (650), of the three-phase core.

Additionally, the first coil (604) of the R phase is connected in series between the R phase generator (602) of the three-phase electrical system and a second coil (606) located on the third leg (650) of the three-phase core. This configuration ensures that the connection of the first and second coils (604 and 606, respectively) always generates magnetic flux in opposite directions between them. This is achieved by reversing the current input to each coil, as shown in the connection shown in Fig. 600.

Furthermore, the second coil (606) is connected in series between the first coil (604) and a third coil (608), which is located on the second leg (648). This configuration ensures that the connection between the second and third coils (606 and 608, respectively) always generates opposite magnetic flux directions between them .

Furthermore, the third coil (608) is connected in series between the second coil (606) and a fourth coil (610), which is located on the first leg (646). This configuration ensures that the connection between the third and fourth coils (608 and 610, respectively) always generates opposite magnetic flux directions between them.

Furthermore, the fourth coil (610) is connected in series between the third coil (608) and a fifth coil (612), both located on the second leg (648). This arrangement ensures that the connection between the fourth and fifth coils (610 and 612, respectively) always generates magnetic flux in opposite directions between them.

Furthermore, the fifth coil (612) is connected in series between the fourth coil (610) and a sixth coil (614), both located on the third leg (650). This configuration ensures that the connection between the fifth and sixth coils (612 and 614, respectively) always generates magnetic flux in opposite directions between them.

Additionally, the sixth coil (614) is connected in series between the fifth coil (612) and the neutral of phase R of the three-phase system (602), thereby closing the electrical circuit.

The connection described above is replicated identically in the S and T phases, with the respective coils (618, 620, 622, 624, 626, 628) for the S phase and (632, 634, 636, 638, 640, 644) for the T phase. This arrangement allows for the formation of six layers on each leg (646, 648, 650).

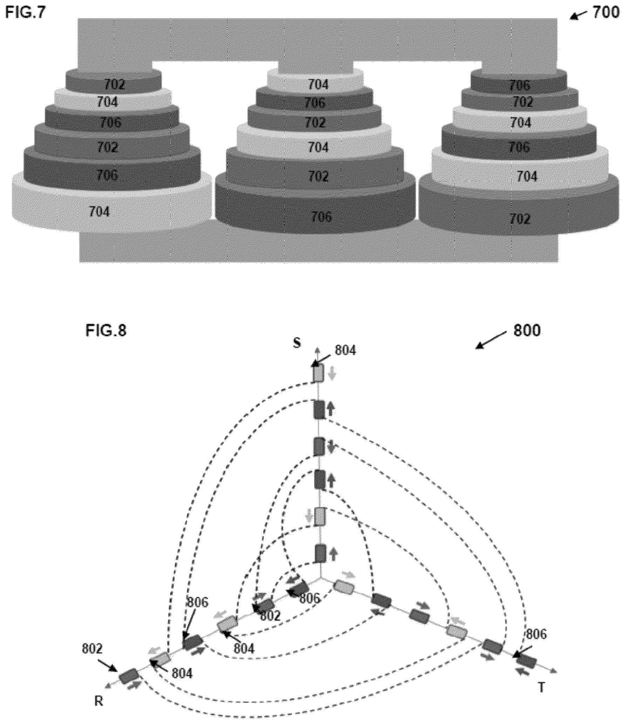

The connection shown above enables the technical effect of cancelling out the magnetic fluxes generated by each phase, in every leg. This is further explained in Fig. 8. Regarding the voltage $E\emptyset$ shown in Fig. 6, this represents the phase voltage of the network, measured in volts.

The number of turns for each coil, in this three-phase case, will be:

$$N_v = \frac{N_b}{6} \text{ (Eq. 23: Equation for the Number of Turns for Each Coil in a Three-Phase System)}$$

According to Kirchhoff's voltage law, the sum of the voltages around any closed loop in a circuit must equal zero, implying that the voltage across each coil in such a loop is: $\frac{E\emptyset}{2\sqrt[2]{3}} [V]$ (Eq. 24: Voltage Across Each Coil), a value that will be explained later in this document.

Note that, in the three-phase case, there are six coils connected as shown in the diagram in Fig. 6, with Nv turns each, and distributed in pairs per leg.

From this principle, we understand that the supply voltage of the invention is distributed equally among the coils that are connected in series within its internal circuit. That is, the greater the number of coils in series, the lower the voltage across each coil. Given that the voltage is lower, and as explained in previous paragraphs, the power per coil remains constant (as it depends on the core area). Consequently, we can increase the current flowing through each coil.

The total number of layers or windings is determined by dividing the number of turns by the number of phases, and then dividing by 2, to achieve the nulling pair effect. This can be seen in Figs. 7 and 8.

The configuration of the six layers is illustrated in Fig. 7, where Fig. 700 displays the six layers per leg, each formed by pairs of coils (702, 704, and 706) corresponding to each phase-R, S, and T, respectively. The orientation of each coil aligns with that shown in Fig. 6.

Note that the size of the coils in Fig. 7 is for reference only and is in no way meant to indicate that one coil has more "turns" than another. Each coil has the same number Nv of turns. The desired visual effect is to show "layers", one coil on top of the next.

The technical effect of this connection, as depicted in Figs. 6 and 7, is related to the one illustrated in Fig. 8, which shows the direction of the fluxes generated by the invention's stabilizer. For simplicity only what happens in the R phase is explained, but a person skilled in the art will understand that this is replicated in the S and T phases.

Fig. 8 details the direction of the flux generated by each of the six coils in each leg of the three-phase core. Coils (802) correspond to phase R, coils (804) to phase S, and coils (806) to phase T. The figure demonstrates that each pair of coils generates opposite fluxes. Furthermore, it shows that the total flux for each leg, resulting from the cumulative effect of each coil in each phase, results in a net flux of zero for each leg.

According to the understanding of a person skilled in the art, Faraday's law states that the net flux enclosed by a coil depends on the area of the surface traversed by a magnetic field (B).

$$\emptyset = \int_S B * dS \text{ (Eq.25: Faraday's Law)}$$

By applying this principle, we understand that if two coils are arranged in a zig-zag pattern, the net flux enclosed by them cancels out, resulting in very low impedance to the flow of current. However, the impedance of each leg of the three-phase core remains unbalanced because only two phases per leg are crossed. In the event of a fault, such as the

EP 4 429 091 A1

loss of one phase, the flux cancellation in the legs will not be uniform, preventing the system from functioning properly.

To resolve this issue, as detailed in the wiring shown in Fig. 6, the invention's stabilizer mixes the flows from the three phases by creating multiple crossings in even layers (e.g., 802 with 804, 806 with 804, and 802 with 806 in phase R). This approach ensures that the circuit's unbalanced currents are compensated, thereby maintaining balance in both the network and the stabilizer.

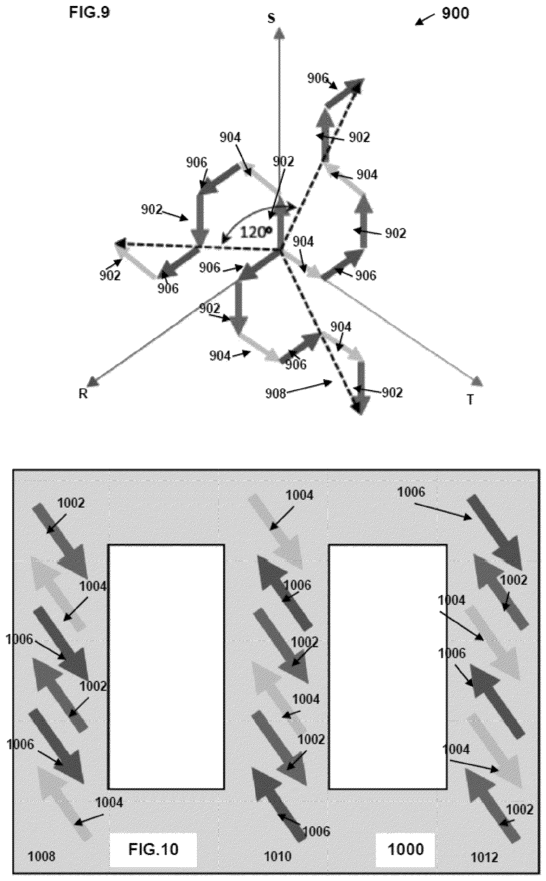

Configuring the coils as described in Fig. 6, ensures the even distribution of currents from all three phases across the legs of the invention's stabilizer, thereby achieving homogeneous compensation of the fluxes and currents throughout the circuit (see Figs. 9 and 10).

Fig. 9 depicts the vector diagram of the invention's wiring, demonstrating that the connection detailed in Fig. 6 produces, in each leg, the voltage corresponding to each phase.

In it, we see the vector sum of the flux vectors from each coil, which together generate the respective phase voltage vector as the resulting vector. This should be understood as follows: The directions of the magnetic fluxes (902) corresponding to the R phase are vectorially summed with the flux vectors (904) from the S phase and the flux vectors (906) from the T phase in each leg. Thus, we observe, for example, that the vector sum of the fluxes (906, 902, 904, 906, 904, and 902) results in vector (908), which corresponds to the phase voltage vector.

Fig. 10 illustrates another representation of what is depicted in Fig. 9, where item 1000 shows the magnetic fluxes occurring in each leg (1008, 1010, and 1012) of the invention's stabilizer, and the directions they follow in each leg. This demonstrates that voltage is generated in each leg (1008, 1010, and 1012) due to the configuration of the invention, which reliably prevents short circuits. This prevention is achieved through the effective cancellation of magnetic fluxes, as described in Fig. 6, for each phase.

This connection facilitates compensation between the phases for each flux produced by the residual and in-phase currents. Thus, by implementing six breaks per leg, we can effectively subdivide the voltage and proportionally increase the current.

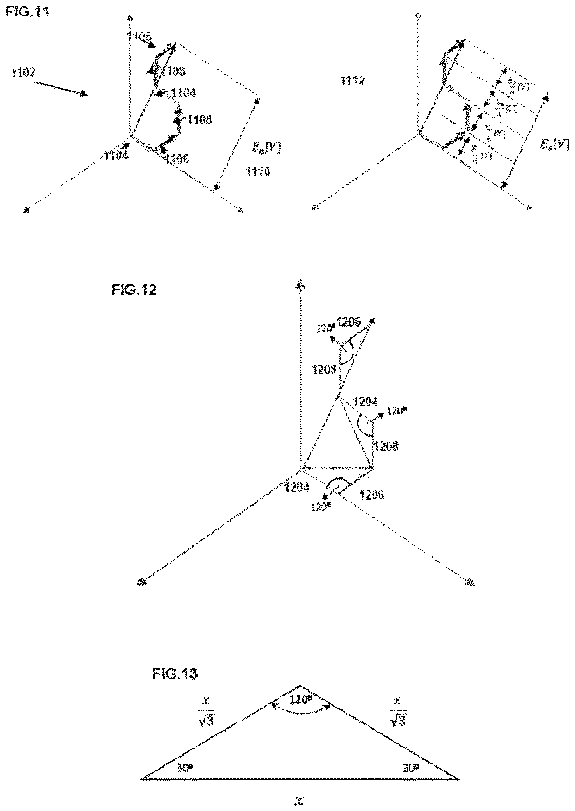

To calculate the voltage in the coils of the invention's stabilizer, it is necessary to analyse the voltage phasor diagram, as depicted in Fig. 11.

Item (1102) illustrates how to calculate the voltage for one phase using calculation $E\emptyset$ of the resulting vector 1110. For simplicity, the voltage calculation for the other 2 phases is not shown, since a person skilled in the art will understand that it is the same for each case.

This voltage $E\emptyset$ is composed of the algebraic sum of the breaks that each magnetic flux (1104, 1106, 1108) generates.

Item 1112 shows how the voltage of each coil is obtained. With four changes in the direction of fluxes, the phase voltage $E\emptyset$ is divided by four, resulting in E$\emptyset$/4.

Then, we identify the points on the vector plane where a potential difference ($N_{E\emptyset}$) exists.

Fig. 12 demonstrates that with a phase difference of 120°, the voltage vectors form three obtuse triangles: between (1204 and 1206), between (1204 and 1208), and between (1208 and 1206). Applying known triangle geometry (See Fig. 13), the voltage drop in one of the coils of the invention's stabilizer can be calculated.

By having a phase difference of 120°, the voltage vectors will form three obtuse triangles. By applying known triangle geometry, the voltage drop in one of the coils of the invention's stabilizer can be calculated.

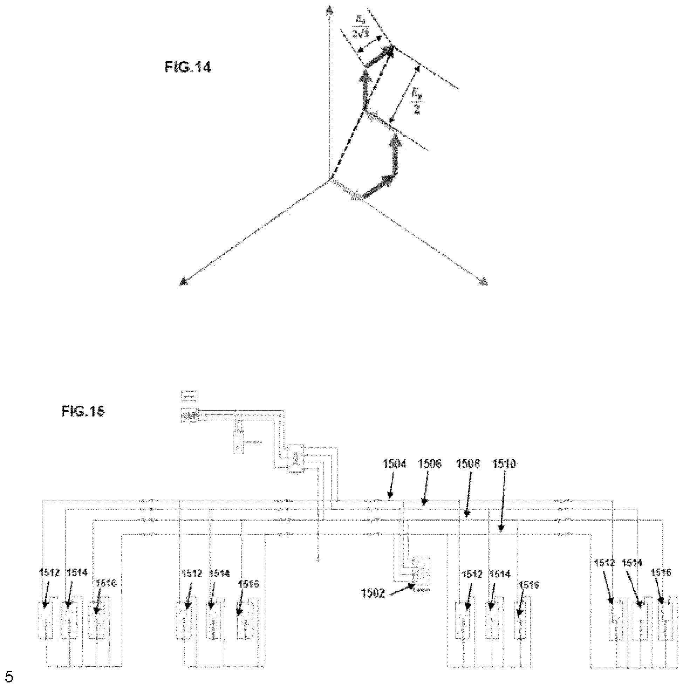

Thus, Fig. 14 illustrates how, by applying triangle geometry, we can determine the voltage in each coil, as

$$Vv\emptyset = \frac{E\emptyset}{2\sqrt[2]{3}} \ [V]$$

expressed by the equation: . (Eq. 24: Voltage Of Each Coil)

This concept is absolutely unknown to teams seeking to solve the problem of zero-sequence currents.

## SIMULATIONS

This newly revealed concept can be observed and understood through simulations using specialized software, which demonstrate the effects and voltage drops in each coil of the Stabilizer's leg.

To support this, we have conducted simulations and laboratory tests on the circuit depicted in Fig. 15, where the inventive device (1502) is connected to three NLD loads [presumo non linear loads] with varying current consumptions. The following results were obtained:

The following tables summarize the results from the simulation of the circuit depicted in Fig. 15. In this figure, items 1504, 1506, 1508, and 1510 represent the lines L1, L2, L3, and neutral, respectively. Item 1502 is the invention's stabilizer, connected to these lines. Connected to the stabilizer are four groups of loads labelled 1512, 1514, and 1516, drawing currents of 5, 10, and 15 amperes [A], respectively.

Table 1-A displays the Reduction of the Total Harmonic Distortion of Current (THDi) for each phase: L1, L2, and L3, resulting from the use of the invention's stabilizer.

Table 1-B illustrates the impact of the invention on power factor (PF) correction.

9

Table 1-C demonstrates the effect of the invention on reducing the current flowing through the neutral of the three-phase system, which results from harmonic distortion.

Table 1-A. Reduction of Total Harmonic Distortion of Current (THDi) for each phase L1, L2 and L3

| LOAD | Without Looper | | | With Looper | | |
|------|------|------|------|------|------|------|
| | L1-THD i | L2-THDi | L3-THDi | L1-THDi | L2-THDi | L3-THDi |
| NLD-15A | 24.9% | 23.5% | 24.4% | 12.5% | 11.8% | 12.1% |
| NLD-10 A | 22.1% | 19.9% | 20.2% | 10.9% | 9.8% | 9.9% |
| NLD-5 A | 12.5% | 14.1% | 15.7% | 8.6% | 9.9% | 8.8% |

Table 1-B. Power factor (PF) correction .

| LOAD | Without Looper | | | With Looper | | |
|------|------|------|------|------|------|------|
| | L1-PF | L2-PF | L3-PF | L1-PF | L2-PF | L3-PF |
| NLD-15 A | 0.85 | 0.86 | 0.85 | 0.92 | 0.92 | 0.92 |
| NLD-10 A | 0.87 | 0.87 | 0,88 | 0.93 | 0.93 | 0.94 |
| NLD-5 A | 0.92 | 0.91 | 0.91 | 0.94 | 0.93 | 0.94 |

Table 1-C. Reduction current in the neutral due to harmonic distortion.

| LOAD | I Neutral | |
|------|------|------|
| | Without Looper | With Looper |
| NLD-15 A | 18.1 | 8.3 |
| NLD-10 A | 12.3 | 4.2 |
| NLD-5 A | 7.6 | 3.2 |

A particular application of the invention's stabilizer is that it can be used in two-phase systems. This is because the invention's stabilizer is capable of absorbing the zero-sequence currents of a two-phase electrical power distribution network (balanced and unbalanced).

The flux cancellation method incorporates two phases per leg in the core, with four breaks per leg, each managing 25% of the flux vectors from the two phases. This approach is capable of achieving a recorded efficiency of 85% absorption.

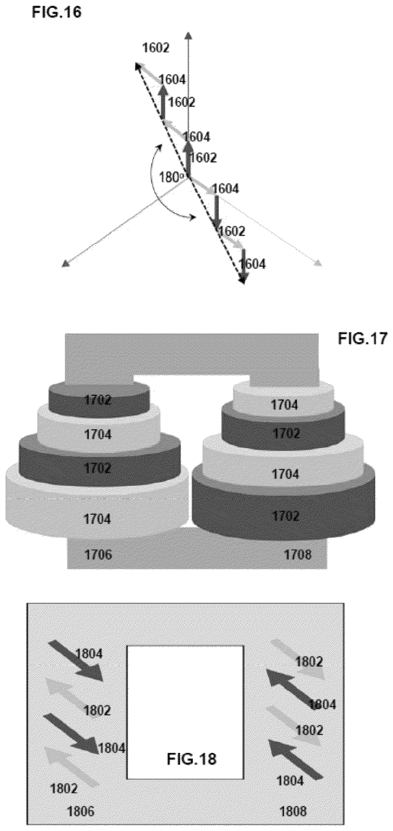

This can be seen in Fig. 16, which shows the vector diagram of the invention's stabilizer in a three-phase system, where the phases are 180° apart.

The winding configuration is shown in Fig. 17, where each coil of each phase is layered. Thus the first leg (1706) has 4 coils, 2 pertaining to the R phase (1702) and 2 to the S phase (1704). The same configuration is repeated in leg (1708).

Fig. 18 shows the direction of the magnetic fluxes per phase, (1802 and 1804), in each leg (1806 and 1808).

**PRIOR ART**

Several solutions referenced in the prior art have been identified, but none achieves the technical effects that the invention's stabilizer and its application provide.

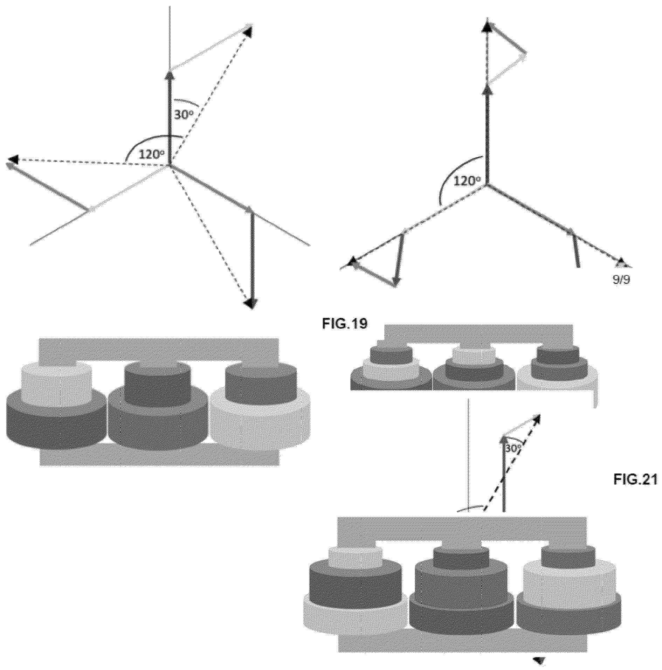

Figs. 19 to 21 illustrate the various approaches that the prior art has presented to solve the harmonics issue, yet none achieve the technical effects of the invention.

For example, US Patent 6043569 A (Gregory N. C. Ferguson) discloses an apparatus for reducing zero-sequence harmonic voltages and currents generated by non-linear loads in three single-phase circuits, which are combined to form a six-wire derived circuit, and its source from a four-wire three-phase distribution system. The apparatus comprises a zig-zag connected three-phase autotransformer, which has three pairs of phase and neutral terminals; and means for respectively connecting the phase and neutral terminals of the zig-zag autotransformer in parallel with the six-wire derived circuit at the load end of the same.

The flow cancellation method described by US Patent 6043569 A only mitigates the "triplen" harmonic currents in a low-voltage industrial or residential network for a balanced system, without addressing the effects of currents in unbalanced systems.

Its composition includes two phases per leg in the core, with a 50% flux break at each vector, as shown in Fig. 19. In addition, its recorded absorption efficiency is 65%.

Another prior art document is patent CL 2007001057 A1 (Veloso, Luis), which discloses a zero-sequence harmonic suppression system for unbalanced three-phase systems with non-linear loads, where the distribution of fluxes occurs in proportions of 25% in each of the three legs of the suppressor.

Its configuration will allow it to absorb the '*homopolar*' harmonic currents of an industrial or domestic low-voltage network for an unbalanced system.

The flow cancellation method includes three phases per leg in the core, with two flux breaks: 50% in the first phase and 25% in the other two phases of each vector. This can be seen in Fig. 20.

The recorded absorption efficiency is 75%.

Finally, the prior art is illustrated by patent document ES 2575589 A1 (Enriquez Hochreiter, Miguel; Garcia Hoya, Miguel), which pertains to a three-phase autotransformer device involving multiple windings connected in a zig-zag pattern. This device is characterized by such windings being arranged concentrically, with two crossings with the windings of different phases on a single three-phase core, and reversing the direction of each winding at least twice.

This invention mitigates 'triplen' harmonic currents in a low-voltage industrial or residential network for a balanced system, thanks to the flow cancellation that includes two phases per leg in the core, with two flux breaks at 50% for the first phase and 25% for the second phase of each vector (see Fig. 21).

The recorded absorption efficiency is 65%.

From the analysis of the prior art, we can conclude that the invention described in this application provides novel differences. These include a higher number of coils and breaks per phase in the core of the stabilizer, each at 16.67% of the flux vectors of the 3 phases. These differences result in technical effects related to the elimination of zero-sequence currents in both balanced and unbalanced systems, with a recorded absorption efficiency of 85%, surpassing what has been achieved by the prior art.

Lastly, the invention's stabilizer, in both its three-phase and two-phase versions, comprises the following control and protection elements for safe and reliable operation.

It is understood that the components, which are tripled in the three-phase version, are doubled in the two-phase version. A list the essential components to be connected, which is not exhaustive, is summarized below:

1. Thermomagnetic protection 3x16 [A].
2. Connection instructions.
3. Phase failure relay 220 [V].
4. Automatic contactor 3x18 [A].
5. Neutral terminal block 60 [A].
6. Identification plate.
7. Pilot light ammeter.
8. 90° elbow wiring inlet.
9. Z-anchor for attachment to utility poles.
10. Eyebolts.
11. Forced ventilation grille.

**Abbreviations and Definitions**

For purposes of this document, the following abbreviations have the meanings indicated below:

A: Ampere.
AC: Alternating current.
LV: Low voltage.
D: Delta connection of a transformer.
DC: Direct Current.
PF Power Factor.
Hz: Hertz.
IEC: International Electrotechnical Commision.
Iø: Phase current (for phases R, S, T).
In: Neutral current.

Irms: Effective current.
kV: Kilo Volt.
kVA: Kilo Volt Ampere.
kW: Kilo Watts.
Lb: Coil Length [?]
NDL: Nonlinear residential loads [?]
PM Average Perimeter.
V: Volt.
Vø: Phase Voltage (for phases R, S, T).
Vrms: RMS Voltage.
SED: Distribution Substation
t: Time.
TC: Current transformer.
THD: Total Harmonic Distortion.
W: Angular Frequency.
Y: Star connection of a transformer.
Z: Impedance.
Ø: Phase:

For the purposes of this document, the definitions set forth herein are as follows:

Feeder: A circuit that is part of the Distribution Network extending from a Primary Distribution Substation or from a feeder owned by another Distribution Company, from which it receives energy, to the connection point where customer and user installations are connected.
Harmonic Distortion: It is the distortion of the sinusoidal waveform of current or voltage at nominal frequency, caused by the presence of sinusoidal electrical signals at frequencies that are not multiples of the said nominal frequency.
Distribution Company or Distributor: Distribution company(ies) concessionaire(s) of the public distribution service or anyone who provides the distribution service, whether as owner, lessee, user or operator, in any capacity, of electric energy distribution facilities.
Power Factor: Power Factor is the ratio between active energy (expressed in kW) and apparent power (expressed in kVA) that is consumed or injected at a specific point in a network.
Phase: Conductor that carries electric current. In a three-phase system with neutral return there are three phases ("R", "S", "T") and a neutral "N".
Nominal Voltage: This is the voltage between the phase and neutral in single-phase systems, and between phases in other systems. It is used to name or identify a network, a substation, or a user's installation.
User: Any individual or legal entity, whether owner, lessee, user, or operator under any title, of installations connected to a Distribution Company's network.

**Claims**

1.  A device for returning zero-sequence residual currents circulating through the neutral in an electrical distribution system, which re-injects them into each phase toward the loads. This device features a three-phase core with three legs and is **characterized in that** for each of the three phases R, S, and T, of this three-legged three-phase core, an assembly of 18 coils is formed, organized into groups of six coils for each phase R, S, and T, and arranged in six layers per leg;

    where each of the six coils of each phase has the same number of winding turns, and where in each leg, of the respective legs of the three-phase core, pairs of coils are installed for each phase R, S, and T, completing six coils per leg. This includes two coils per phase, per leg, and results in six magnetic flux breaks per phase and per leg;
    where the first coils of phases R, S, and T are installed in the first leg of the three-phase core, and where these first coils are connected in series between the respective phase voltage of the three-phase electrical system and second coils of phases R, S, and T, located in the third leg of the three-phase core. This arrangement ensures that the connection of these first and second coils always generates magnetic flux in opposite directions between them;
    where these second coils are connected in series between the first coils and third coils of phases R, S, and T, located in the second leg of the core. This configuration ensures that the connection between the second and third coils always produces opposite magnetic flux directions between them;

where these third coils are connected in series between the second coils and fourth coils of phases R, S, and T, located in the first leg. This arrangement ensures that the connection between the third and fourth coils always produces opposite magnetic flux directions between them;

where these fourth coils are connected in series between the third coils and fifth coils of phases R, S, and T, located in the first leg. This arrangement ensures that the connection between the fourth and fifth coils always produces opposite magnetic flux directions between them;

where these fifth coils are connected in series between the fourth coils and sixth coils of phases R, S, and T, located in the first leg. This arrangement ensures that the connection between the fifth and sixth coils always produces opposite magnetic flux directions between them;

and where these sixth coils are connected in series between the fifth coils and the neutral of the voltage of each respective phase of the three-phase system, thereby closing the electrical circuit;

where the combination of the six coils from each of the three phases R, S, and T, in the previously described connection, generates, in each of the three legs of the three-phase core, the cancellation of magnetic fluxes and a voltage in each leg, equivalent to that of each phase.

2. A device for returning zero-sequence residual currents circulating through the neutral in an electrical distribution system, which re-injects them into each phase towards the loads, as described in Claim 1, and is **characterized in that** each leg of the three-phase core contains six layers, where each layer is a coil.

3. - A device for returning zero-sequence residual currents circulating through the neutral in an electrical distribution system, which re-injects them into each phase towards the loads, as described in Claim 1, and is **characterized in that** the voltage of each coil is determined by the equation $\frac{E\phi}{2\sqrt[2]{3}}\,[V]$ , where *Eø* represents the phase-to-neutral voltage of the three-phase electrical system.

4. - A device for returning zero-sequence residual currents circulating through the neutral in an electrical distribution system, which re-injects them into each phase towards the loads, as described in Claim 2, and is **characterized in that** the number of coil turns per layer in each leg is determined by the equation: $N_v = \frac{N_b}{2 * \text{N}^\text{o}\ \text{fases}}$ , where Nb is the total number of turns of the coils located in a leg.

5. A device for returning zero-sequence residual currents circulating through the neutral in an electrical distribution system, which re-injects them into each phase towards the loads, as described in Claim 1, and is **characterized in that** it is able to operate in both balanced and unbalanced distribution systems.

6. A device for returning zero-sequence residual currents circulating through the neutral in an electrical distribution system, which re-injects them into each phase towards the loads, as described in Claim 2, and is **characterized in that** it can operate in polyphase systems, particularly in three-phase and two-phase systems.

7. A device for returning zero-sequence residual currents circulating through the neutral in an electrical distribution system, which re-injects them into each phase towards the loads, as described in Claim 6, and is **characterized in that** to operate in two-phase systems, the device includes two phases per leg in the core, with four breaks per leg in the core, each accounting for 25% of the flux vectors of the two phases.

8. A device for returning zero-sequence residual currents circulating through the neutral in an electrical distribution system, which re-injects them into each phase towards the loads, as described in Claims 1 and 6, and is **characterized in that** it comprises, for its manufacture and operation, the integration of at least one thermomagnetic protection 3x16 [A], at least one phase failure relay 220 [V], at least one automatic contactor 3x18 [A], at least one neutral terminal block 60 [A], at least one pilot light ammeter, at least one Z-anchor for attachment to utility poles, and at least one forced ventilation grille.

FIG.1

**100**

TRANSFORMER
**102**

Phases    **104**

$I_{RN}$   $I_{SN}$   $I_{TN}$

**106**

$Z_{RN}$   $Z_{1N}$   $Z_{TN}$   Users

Neutral     **108**

$I_N$

**200**

Fundamental
**202**

Third Harmonic Current
**204**

**206**

Distorted Current

FIG.2

FIG.3

Current vs Time

R Phase
302

S Phase
308

T Phase
314

FIG.4

FIG.5

500

Looper : Looper Reactor

: Single-Phase Loads

⟶ : Flow of Zero-Sequence
Harmonic Currents    506

TRANSFORMER

504

508

Looper

502

FIG.6

652    600

606

604 $\frac{E\phi}{2\sqrt{3}}$

608

$\frac{E\phi}{2\sqrt{3}}$

602 $E\phi[V]$ Fase R

610 $\frac{E\phi}{2\sqrt{3}}$

$\frac{E\phi}{2\sqrt{3}}$

612 $\frac{E\phi}{2\sqrt{3}}$

Pierna

614 $\frac{E\phi}{2\sqrt{3}}$

646    648    650

652

618 $\frac{E\phi}{2\sqrt{3}}$

620 $\frac{E\phi}{2\sqrt{3}}$

$\frac{E\phi}{2\sqrt{3}}$ 622

616 $E\phi[V]$ Fase S

624 $\frac{E\phi}{2\sqrt{3}}$

626 $\frac{E\phi}{2\sqrt{3}}$

628 $\frac{E\phi}{2\sqrt{3}}$

652

632 $\frac{E\phi}{2\sqrt{3}}$

634 $\frac{E\phi}{2\sqrt{3}}$

$\frac{E\phi}{2\sqrt{3}}$ 636

630 $E\phi[V]$ Fase T

638 $\frac{E\phi}{2\sqrt{3}}$

640 $\frac{E\phi}{2\sqrt{3}}$

644 $\frac{E\phi}{2\sqrt{3}}$

FIG.7

700

702
704
706
702
706
704

704
706
702
704
702
706

706
702
704
706
704
702

FIG.8

800

S

804

806

802

806

804

806

802

804

R

T

FIG.9

FIG.10

FIG.11

FIG.12

FIG.13

**FIG.14**

**FIG.15**

FIG.16

1602

1604
1602

1604
1602

180°

1604

1602

1604

FIG.17

1702

1704

1704

1702

1702

1704

1704

1702

1704

1702

1706

1708

1804

1802

1802

1804

1802

1804

FIG.18

1802

1804

1802

1806

1808

EP 4 429 091 A1

FIG.19

FIG.21

9/9

22

**INTERNATIONAL SEARCH REPORT**

| International application No. |
| --- |
| PCT/CL2022/050110 |

| A. | CLASSIFICATION OF SUBJECT MATTER |
| --- | --- |

(CIP) H02M1/12 1/126; H01F30/12, 30/02; H02J3/01; H01F27/28 (2023.01)

According to International Patent Classification (IPC) or to both national classification and IPC

| B. | FIELDS SEARCHED |
| --- | --- |

Minimum documentation searched (classification system followed by classification symbols)

(CIP) H02M, H01F30, H02J

Documentation searched other than minimum documentation to the extent that such documents are included in the fields searched

Electronic data base consulted during the international search (name of data base and, where practicable, search terms used)

DERWENT INNOVATION, GOOGLE, ESP@CENET, INAPI

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2016/0276099 A1 (THE BOEING COMPANY), 22 September 2016. Abstract; [0002], [0054], [0064] [0097], [0097]; figs. 1 , 5, 7, 8 and 9. | 1-8 |
| A | US 2011/0148556A1 (HOON-YANG P.), 23 June 2011. Abstract; [0001], [0004], [0005], [0007], [0041], [0042]; Fig.3. | |
| A | US 8,497,755 B2 (Hoon-Yang P.), 30 July 2013. Abstract; col. 1 , líns. 47-51 ; col. 2, líns. 43-67; col. 4, líns. | |

| [X] Further documents are listed in the continuation of Box C. | [X] See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 January 2023 | 17 february 2023 |

| Name and mailing address of the ISA/ CL | Authorized officer |
| --- | --- |
| | |
| Facsimile No. | Telephone No. |

Form PCT/ISA/210 (second sheet) (January 2015)

**INTERNATIONAL SEARCH REPORT**

| International application No. |
|---|
| PCT/CL2022/050110 |

C (Continuation).    DOCUMENTS CONSIDERED TO BE RELEVANT

| Category* | Citation of document, with indication, where appropriate, of the relevant passages | Relevant to claim No. |
|---|---|---|
| A | US 2011/0148391 A1 (ROSENDIN ELECTRIC, INC), 23 June 2011. Abstract; fig. 3. | |
| A | US11,005,26561 (SWITCHED SOURCE PB LLC), 11 May 2021. Abstract; col. 2, líns. 63-65; fig. 1. | |
| A | CN202218017U (SHENZHEN XINHENGJI ELECTRIC CO Ltd), 09 May 2012. Abstract; figs. 1 and 4. | |

Form PCT/ISA/210 (continuation of second sheet) (January 2015)

INTERNATIONAL SEARCH REPORT
Information on patent family members

International application No.

PCT/CL2022/050110

| US2016/0276099A1 | 22-09-2016 | BR102016005125A2 | 20-09-2016 |
| | | CN105990010A | 05-10-2016 |
| | | CN105990010B | 06-08-2019 |
| | | EP3070725A1 | 21-09-2016 |
| | | EP3070725B1 | 11-12-2019 |
| | | JP2016178291A | 06-10-2016 |
| | | JP6549053B2 | 24-07-2019 |
| | | US10049811B2 | 14-08-2018 |
| US2011/0148556A1 | 23-06-2011 | CN102124530A | 13-07-2011 |
| | | KR101173632B1 | 13-08-2012 |
| | | KR20100047187A | 07-05-2010 |
| US8,497,755B2 | 30-07-2013 | KR100825058B1 | 24-04-2008 |
| | | US2011115590A1 | 19-05-2011 |
| | | WO2009096642A1 | 06-08-2009 |
| US2011/0148391A1 | 23-06-2011 | CA2701669A1 | 18-06-2011 |
| | | CA2701669C | 28-01-2014 |
| | | US8384371B2 | 26-02-2013 |
| US11,005,265B1 | 11-05-2021 | EP4078797A1 | 26-10-2022 |
| | | WO2021133695A1 | 01-07-2021 |
| | | US11056883B1 | 06-07-2021 |
| CN202218017U | 09-05-2012 | None | --- |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63275547
- US 6043569 A
- WO 2007001057 A1
- ES 2575589 A1